(19) Europäisches Patentamt

European Patent Office

Office européen des brevets

(11) **EP 0 724 971 B1**

(12) **FASCICULE DE BREVET EUROPEEN**

(45) Date de publication et mention
de la délivrance du brevet:
**08.08.2001 Bulletin 2001/32**

(51) Int Cl.7: **B60B 3/06**

(21) Numéro de dépôt: **96400218.2**

(22) Date de dépôt: **31.01.1996**

(54) **Roue en alliage léger**

Leichtmetallrad

Light-alloy wheel

(84) Etats contractants désignés:
**DE ES FR GB IT SE**

(30) Priorité: **31.01.1995 FR 9501103**

(43) Date de publication de la demande:
**07.08.1996 Bulletin 1996/32**

(73) Titulaire: **MONTUPET S.A.**
**F-92110 Clichy (FR)**

(72) Inventeurs:
• **Meyer, Philippe**
**F-60600 Ronquerolles (FR)**

• **Berrez, Bruno**
**F-36000 Chateauroux (FR)**

(74) Mandataire: **Martin, Jean-Jacques**
**Cabinet Régimbeau**
**20, rue de Chazelles**
**75847 Paris cedex 17 (FR)**

(56) Documents cités:
| | |
|---|---|
| **EP-A- 0 074 118** | **EP-A- 0 301 472** |
| **EP-A- 0 546 307** | **EP-A- 0 549 141** |
| **DE-A- 4 321 057** | **FR-A- 2 290 316** |
| **GB-A- 2 249 063** | **US-A- 4 316 637** |
| **US-A- 4 861 113** | |

**Description**

La présente invention a trait d'une façon générale aux roues en alliage léger pour automobiles. Par "automobiles", on entend ici et dans toute la suite du texte les véhicules légers ou semi-légers par opposition aux poids lourds.

Classiquement, un grand nombre de roues d'automobiles sont réalisées en acier, avec une bonne robustesse mais un poids conséquent.

Ces roues étant généralement peu esthétiques, elles reçoivent un enjoliveur, en tôle chromée, en matière plastique, etc.

Pour donner aux roues une plus grande légèreté, on sait également les réaliser en alliage léger, notamment en alliage d'aluminium.

Et du fait qu'elles sont fabriquées par moulage, il est possible de donner à ces roues un aspect satisfaisant sur le plan esthétique, même si ce souci esthétique aboutit à un poids plus élevé que celui qui pourrait être attendu de l'utilisation des alliages légers. C'est ainsi que jusqu'à présent, pour les automobiles de série, une roue en alliage léger a généralement été considérée comme un produit de style

La présente invention est fondée sur une démarche totalement opposée à la démarche ci-dessus.

Plus précisément, bien que cela puisse a priori être considéré comme une régression, la Demanderesse a cherché à réaliser une roue en alliage léger aussi légère que techniquement possible, quitte à lui adjoindre, en cas de résultat non satisfaisant sur le plan esthétique, un enjoliveur, qui peut être d'un poids minime, et en tout cas inférieur à l'excédent de poids lié au travail "esthétique" d'une roue en alliage léger monobloc traditionnelle.

On connaît déjà par DE-A-43 21 057 une roue moulée en alliage d'aluminium pour automobile, du type comportant un voile et une jante, le voile comportant une zone généralement lisse, dans laquelle sont formées des lumières de gain de poids et de ventilation de frein, et des zones adjacentes, généralement pleines et lisses. Un but de l'invention est de proposer une roue de ce type présentant une bonne tenue mécanique à la rupture de fatigue et dont l'ensemble des caractéristiques géométriques de la roue sont déterminées en fonction seulement de considérations de tenue mécanique de la roue, ladite roue comportant dans la région de transition entre le voile et la jante des moyens d'accrochage d'un enjoliveur ayant uniquement une fonction esthétique.

Comme on l'aura compris, le voile d'une telle roue est dépourvu de tout relief et ne présente aucune zone à géométrie anguleuse.

L'invention propose à cet effet une roue selon la revendication 1.

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels :

la figure 1 est une vue de face schématique et partielle d'une roue en alliage léger selon la présente invention,

la figure 2 est une vue à échelle agrandie d'une lumière formée dans cette roue également vue de face,

la figure 3 est une vue partielle en coupe axiale et en détail de la roue de la figure 1,

la figure 4 illustre schématiquement le principe de l'essai de fatigue mis en oeuvre pour tester des roues conformes à l'invention et des roues en dehors de l'invention,

la figure 5 est un plan de vue en coupe d'une roue conforme à un mode de réalisation possible de l'invention,

la figure 6 est un plan correspondant à une vue de dessus de la même roue,

les figures 7 et 8 sont des vues semblables à celles des figures 5 et 6 pour une roue en dehors de l'invention,

les figures 9 et 10 sont des vues semblables à celles des figures 5 et 6 pour une autre roue en dehors de l'invention.

On va décrire ci-dessous une roue d'automobile en alliage d'aluminium, réalisée par moulage, obtenue par des considérations purement techniques de gain de poids.

La roue comprend un voile 10 dans lequel sont formés, d'une part, dans une zone centrale de montage 10a, un ensemble de passages 11 pour des boulons de montage de la roue, et, d'autre part, un ensemble de lumières de gain de poids 12 et de ventilation de frein.

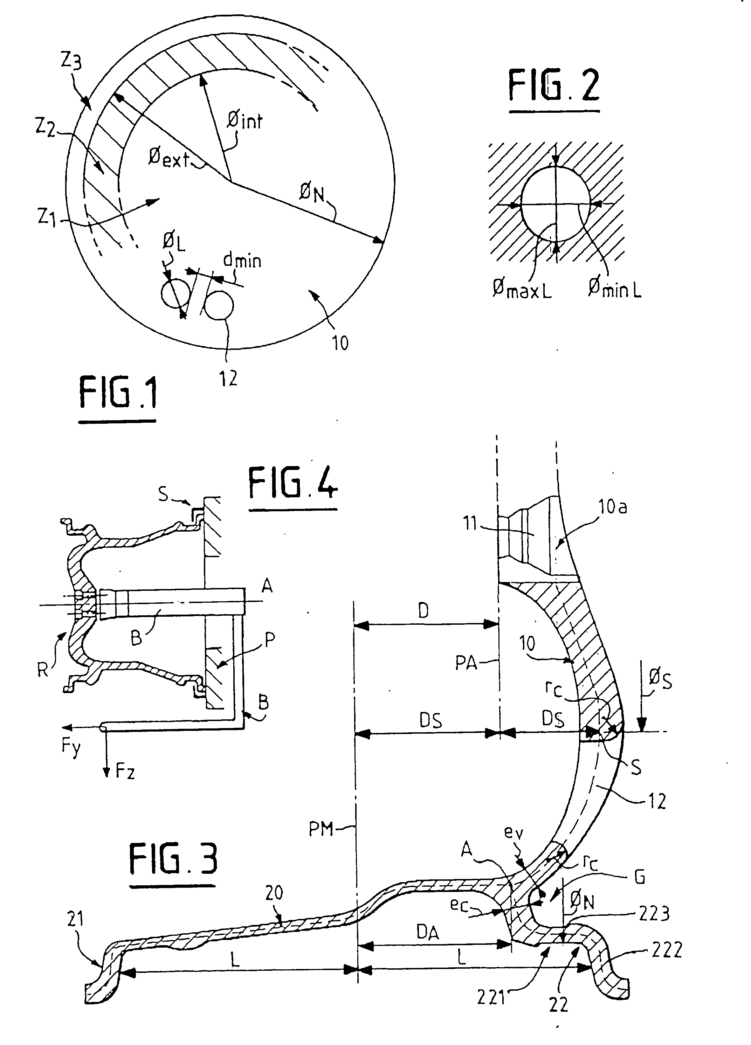

La roue comprend également une jante 20 se terminant du côté intérieur (à gauche sur la figure 3) par un retour 21 de retenue du pneumatique et du côté extérieur par une partie 22 dite "crochet" comportant une section 221 formant crochet ainsi qu'au-delà de la section 221, une section 222 de retenue du pneumatique. La section 221 sert à la retenue d'un enjoliveur en 223, ainsi que d'appui intérieur pour le pneu.

Le gain de poids est recherché en conservant à la roue toutes les qualités admissibles en matière de résistance tant à la fatigue qu'aux chocs.

Tout d'abord, afin d'alléger la roue autant que possible tout en permettant le passage d'air pour les systèmes de freinage sans compromettre sa résistance à la fatigue et sans créer d'amorces de fissures, on a déterminé que les lumières de gain de poids 12 pouvaient être pratiquées dans une zone du voile dont le diamètre $\phi_{ext}$ est compris entre 70% du diamètre normalisé $\phi_N$ de la roue (défini par la surface de la section 221 formant appui intérieur pour le pneu) et 90% de ce diamètre $\phi_N$.

Le diamètre $\phi_{int}$ est défini par le cercle de tangente intérieure des lumières pratiquées dans le voile.

Dans l'exemple de réalisation illustré sur la figure 1, des lumières sont pratiquées seulement dans une couronne de diamètre extérieur $\phi_{ext}$ et de diamètre intérieur $\phi_{int}$.

Cette zone est désignée par la référence Z2 sur la figure 1, tandis que les zones situées à l'intérieur et à l'extérieur, généralement lisses, sont désignées respectivement par Z1 et Z3.

Les lumières 12 pratiquées dans la zone Z2 sont à bords arrondis à l'extérieur de la roue et de préférence circulaires. Elles peuvent toutefois présenter une certaine ovalisation.

L'une de ces lumières est illustrée en plan sur la figure 2.

Si l'on appelle $\phi_{minL}$ la largeur minimale de la lumière, et $\phi_{maxL}$ la largeur maximale de la lumière, et si l'on désigne par E l'excentricité de la lumière, définie par la formule :

$$E = \phi_{minL}/\phi_{maxL},$$

on a constaté que les problèmes d'amorce de rupture étaient minimisés si :

$$0,70 \leq E \leq 1$$

et de préférence :

$$0,90 \leq E \leq 1$$

On a constaté également que la taille de ces lumières devait avoir une relation particulière par rapport au diamètre hors-tout $\phi_N$ de la roue.

Plus précisément, des essais ont permis de démontrer que, si l'on note :

$$\phi_{ML} = (\phi_{minL} + \phi_{maxL})/2$$

alors il était souhaitable que :

$$0,07.\phi_N \leq \phi_{ML} \leq 0,15.\phi_N$$

Par ailleurs, il s'est avéré que la distance minimale entre deux lumières adjacentes 12 devait être choisie avec précaution, ici encore afin de conserver une résistance à la rupture par fatigue qui soit satisfaisante.

Ainsi, si l'on note $d_{min}$ la distance minimale entre deux lumières, il est souhaitable que :

$$0,4.\phi_{ML} \leq dmin \leq \phi_{ML}$$

Par ailleurs, afin d'éviter la présence d'arêtes vives à la transition entre les parois des lumières 12 et la face extérieure du voile 10 de la roue (située à droite sur la figure), il est préférable d'adoucir ces arêtes avec un rayon de courbure $r_c$ compris de préférence entre 1 et 6 mm.

On a découvert également que le profil du voile de la roue avait, dans le cadre de roues moulées en alliage léger, une importance si l'on souhaitait lui donner une résistance à la fatigue suffisante tout en maîtrisant bien son épaisseur.

Plus précisément, selon une autre caractéristique de l'invention, la courbure du voile est telle que les centres de courbure sont en tout point situés du côté intérieur du voile. Ainsi la face extérieure du voile est généralement convexe, et il n'existe dans son profil, entre la zone centrale de montage 10A et sa liaison avec la jante 20 au point A aucun point d'inflexion.

La Demanderesse a également observé que la manière dont se raccordaient le voile, la jante et le crochet de la roue avait une influence significative notamment sur la résistance aux chocs.

La figure 3 montre que la partie crochet 22 et la région la plus extérieure du voile définissent, conjointement avec un relief 223 prévu sur la partie 221, une gorge G qui permet d'alléger la roue et l'accrochage d'un enjoliveur destiné à recouvrir l'ensemble du voile, à l'aide de pattes élastiques ou analogues solidaires dudit enjoliveur.

On notera que cet enjoliveur n'a alors qu'une fonction esthétique et n'intervient aucunement dans le maintien mécanique de la roue.

En variante, la roue peut être légèrement stylisée, auquel cas il n'est pas nécessaire de prévoir un enjoliveur.

Par ailleurs, on observe également sur la figure 3 que les sections 221 et 222 de la partie crochet présentent une épaisseur réduite, au profit de la légèreté de la roue.

De plus, l'épaisseur, notée $e_c$, de la partie crochet 22 à proximité de son raccordement au voile et à la jante (point de raccordement A) est avantageusement choisie supérieure à l'épaisseur du voile, notée $e_v$, au voisinage dudit raccordement.

De préférence, ces épaisseurs satisfont à la relation:

$$e_c/e_v \leq 1,35$$

L'épaisseur de la jante est comprise entre 2,5 et 4 mm.

Par ailleurs, il est avantageux que le point A précité, qui se situe à l'intersection des fibres neutres du voile, de la jante et de la partie crochet, soit situé à une distance horizontale (notée DA) du plan médian PM de la roue qui ne soit pas trop importante par rapport à la demi-largeur, notée L, de la jante 20.

Plus particulièrement, des essais ont permis de démontrer qu'il était souhaitable que les valeurs de $D_A$ et de L satisfassent à la relation :

$$0,57 \leq D_A/L \leq 0,79$$

Les caractéristiques ci-dessus permettent, outre l'allégement précité, d'obtenir une résistance satisfaisante aux chocs que risque de subir la roue au niveau de son crochet. Plus précisément, le fait que le point A soit suffisamment en retrait par rapport au plan général du voile, et le fait que l'épaisseur $e_c$ précitée soit proche de l'épaisseur $e_v$, signifient que des ondes de choc se propageant dans la partie formant crochet 22 vont se propager plus facilement dans la jante que dans le voile, limitant le risque de rupture de ce dernier.

Par ailleurs, la Demanderesse a constaté qu'une autre caractéristique de la roue pouvait s'avérer importante. En particulier, si l'on désigne par S (voir figure 3) le sommet de la fibre neutre du voile, c'est-à-dire le lieu où la fibre neutre est la plus éloignée du plan médian PM de la roue, ce sommet S ne doit pas se trouver à trop grande proximité de l'axe de la roue.

Préférentiellement, si l'on désigne par $\phi_s$ le diamètre du cercle sur lequel se trouvent les points S correspondant aux différentes sections radiales de la roue, ce diamètre satisfait la relation suivante :

$$0,5.\phi_N \leq \phi_S \leq 0,75.\phi_N$$

On a observé par ailleurs que la distance horizontale, notée DS', entre les points S et le plan PA d'appui de la roue devait rester dans des limites raisonnables. De préférence, on fixe :

$$30 \text{ mm} \leq D_S' \leq 55 \text{ mm}$$

Comme on l'a indiqué plus haut, l'invention trouve son intérêt dans les roues en alliage léger, typiquement un alliage d'aluminium classique du type AS7G0.3. On pratiquera sur la roue les traitements thermiques et la trempe conventionnelles pour augmenter la résistance mécanique et la tenue en fatigue de la roue, notamment.

Bien entendu, la présente invention n'est nullement limitée aux formes de réalisation décrites et représentées, mais l'homme de l'art saura y apporter toute variante ou modification conforme à son esprit.

En particulier, pour des raisons d'équilibrage de la valve de gonflage de pneu, une lumière diamétralement opposée pourra être partiellement ou totalement bouchée.

L'invention sera mieux comprise à l'aide des exemples suivants.

Les roues sont dans ces exemples toutes moulées en basse pression, dans un moule métallique constitué principalement d'une semelle percée en son centre d'un système de remplissage, d'un noyau supérieur définissant le relief intérieur de la roue, et de deux chapes latérales définissant la surface extérieure du voile.

Le noyau supérieur et la semelle sont dotés de canaux de refroidissement permettant selon l'état de l'art le pilotage progressif de la solidification depuis les extrémités 21 et 222 du voile jusque vers la zone centrale de remplissage (liée à 10 A). La cadence de moulage est comprise entre 10 et 12 roues à l'heure.

La température du métal liquide dans le four est de 698°C ± 5°C.

Le métal utilisé est de l'AS7G0.3, constitué essentiellement d'aluminium de première fusion, de 7% de silicium ±0,5% et de 0.30% de magnésium ±0,1%.

La géométrie finale de la roue est obtenue par une juxtaposition de zones brutes de moulage et zones usinées comme de coutume pour les jantes en aluminium.

Sauf mention explicite contraire, un traitement thermique est appliqué aux roues entre moulage et usinage, dont les conditions sont les suivantes :

- mise en solution pendant une durée comprise entre 5H et 5H30 à 535°C ± 5°C ;
- trempe à l'eau (température comprise entre 40°C et 80°C);
- revenu pendant une durée comprise entre 4H et 4H30 à 155°C ±3°C.

Les roues subissent un essai de fatigue sur un banc d'essai bidirectionnel dont le principe de sollicitation est donné sur la figure 4.

La roue, désignée par R sur cette figure 4, est montée sur un plateau P tournant autour d'un axe A. La roue R est fixée sur ce plateau P par plusieurs brides S coopérant avec le bord intérieur de la jante. Un système de bras de levier assure la transmission à la roue d'efforts $F_y$ et $F_z$ selon des directions horizontales et verticales par sa partie centrale boulonnée sur un bras B.

L'appréciation de la tenue en fatigue de la roue est faite, après un certain nombre de cycles sous sollicitations $F_y$ et $F_z$, par ressuage et examen visuel, de façon à détecter la présence ou non de fissures de fatigue.

Dans les différentes roues testées, les efforts Fy et Fz sont tels que :

$$F_y = 942 \text{ daN}$$

$$F_z = 706 \text{ daN,}$$

la vitesse de rotation du plateau P étant la même pour toutes les roues testées.

Exemple 1

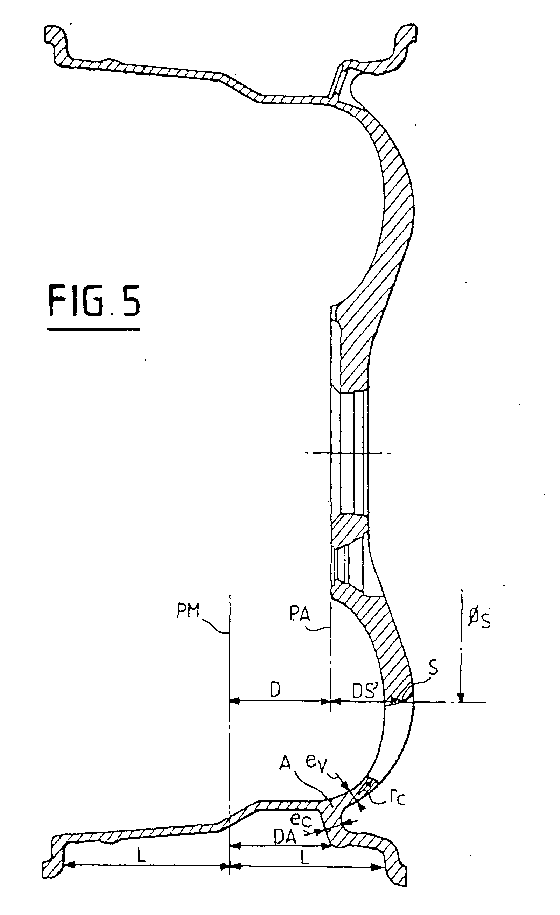

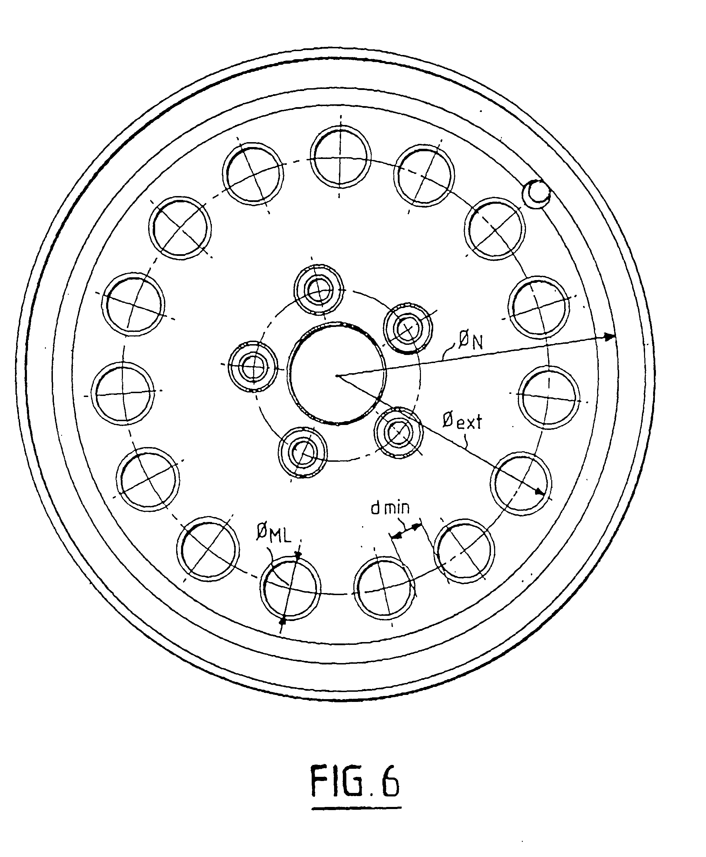

Le premier exemple est une roue réalisée selon l'invention et dont la vue de face et la section caractéristique sont représentées sur les figures 5 et 6.

Ces figures correspondent à des plans exacts de la roue. Elles font partie intégrante de la description. On pourra en particulier s'y référer pour déterminer des proportions entre différentes parties de la roue, ou pour déterminer des dimensions.

Cette roue est caractérisée par les différents paramètres suivants:

| | | |
|---|---|---|
| $\phi_N$ = 380,2 mm | L = 82,55 mm | D = 50 mm |
| $\phi_{ext}$ = 0,83 $\phi_N$ | $e_c$ = 9,0mm | $e_c/e_v$ = 1,22 |
| E = 1 | $e_v$ = 7,4 mm | $D_A/L$ = 0,64 |
| $\phi_{ML}$ = 0,09 $\phi_N$ | $D_A$ = 52,9 mm | |
| $d_{min}$ = 0,68 $\phi_{ML}$ | $\phi_s$ = 237,30 mm | $\phi_s/\phi_N$ = 0,62 |
| rc = 4 mm | $D_s'$= 34,6 mm | |

Aucune fissure n'est détectable après 600 000 cycles de sollicitation de fatigue.

Cette roue tient sous les sollicitations de choc (essai selon la norme japonaise JISHA n° 1 du 25 janvier 1978 et selon la norme BSI BS AU 50 : PART 2 : SECTION 5).

Son poids est de 6.3 kg.

Exemple 2

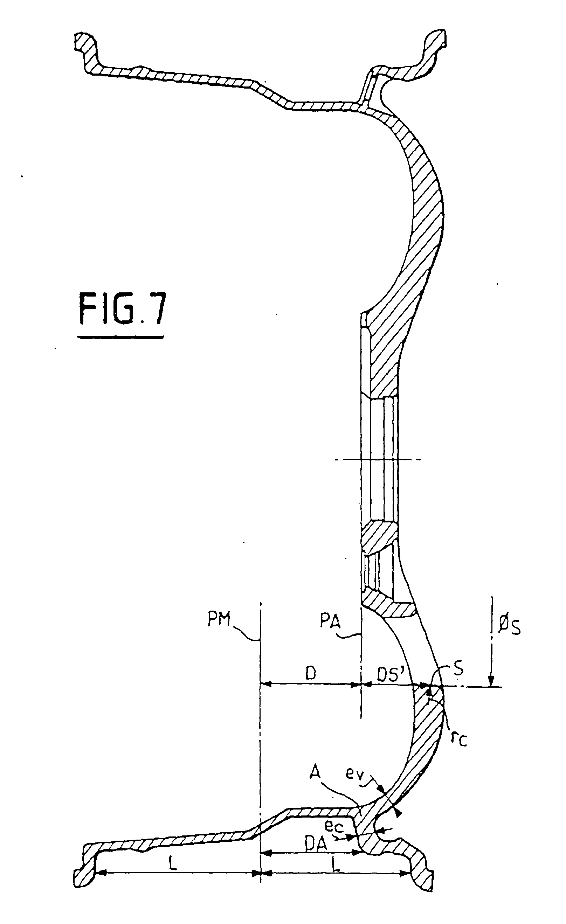

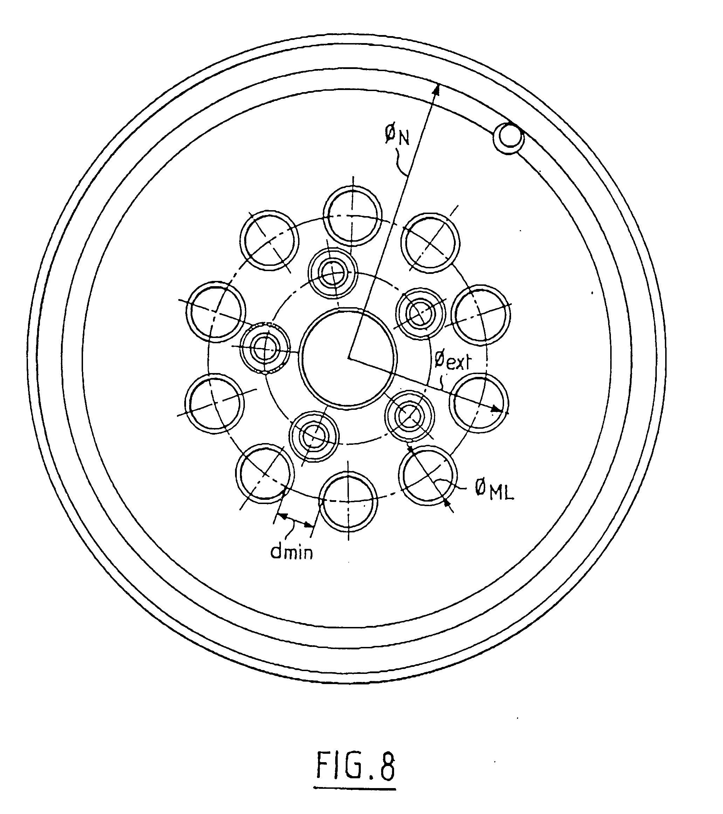

Le deuxième exemple est une roue réalisée hors l'invention et dont la vue de face et la section caractéristique sont données respectivement dans les figures 7 et 8. De la même façon que les figures 5 et 6, ces deux figures sont également intégrées à la présente description.

Cette roue se distingue de l'invention par la présence des lumières trop près de son centre.

Elle est caractérisée par les différents paramètres suivants :

| | | |
|---|---|---|
| $\phi_N$ = 380,2 mm | L = 82,55.mm | D = 50mm |
| $\phi_{ext}$ = 0,57 $\phi_N$ | $e_c$ = 9,0 mm | $e_c/e_v$ = 1,22 |
| E = 1 | $e_v$ = 7,4 mm | $D_A/L$ = 0,64 |
| $\phi_{ML}$ = 0,09 $\phi_N$ | $D_A$ = 52,9 mm | $\phi_s/\phi_N$ = 0,62 |
| $d_{min}$ = 0,77$\phi_{ML}$ | $\phi_s$ = 237,30 mm | |
| rc = 4 mm | $D_{s'}$ = 34,6 mm | |

Des fissures apparaissent prématurément dans le voile avant 200 000 cycles, où l'essai de fatigue a été interrompu pour examen.

Son poids est de 6,4 kg.

Exemple 3

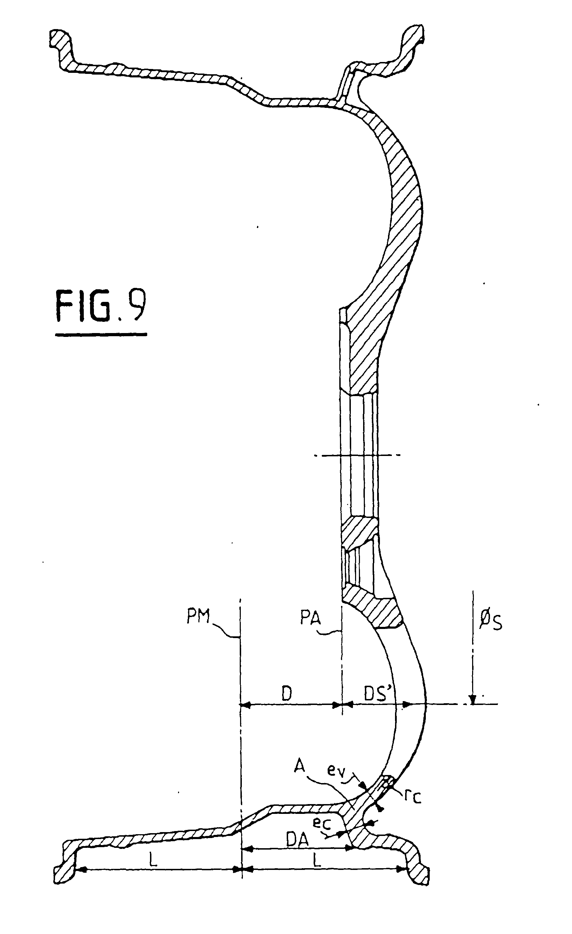

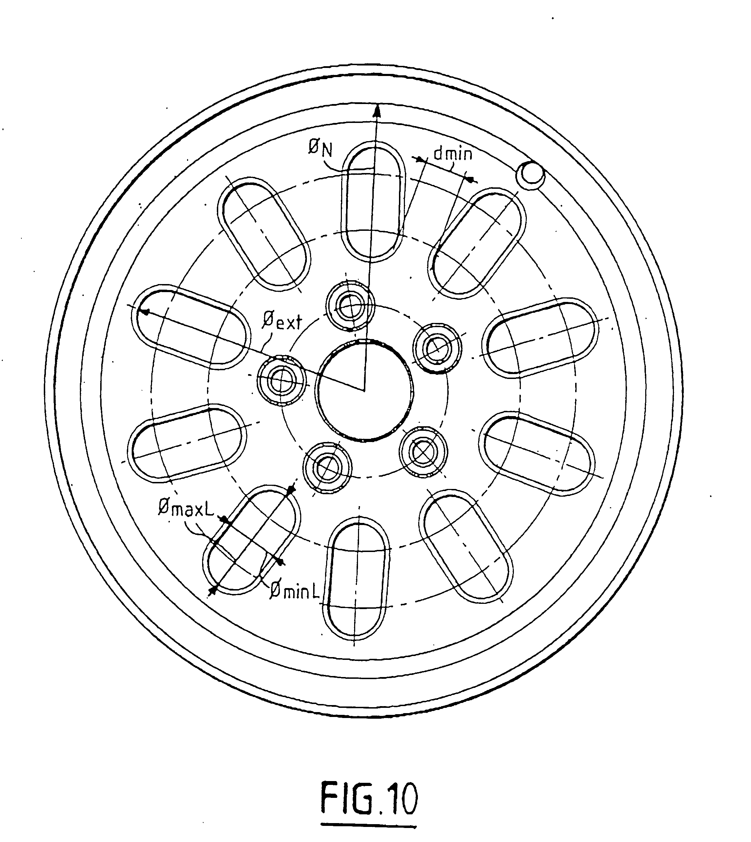

Le troisième exemple est une roue réalisée hors l'invention et dont la vue de face et la section caractéristique sont données respectivement dans les figures 9 et 10, analogues aux figures 5 et 6 et également intégrées à la présente description.

Cette roue se distingue de l'invention par des ajours dont l'excentricité n'est pas conforme.

Elle est caractérisée par les paramètres suivants:

| | | |
|---|---|---|
| $\phi_N$ = 380,2 mm | L = 82,55 mm | D = 50 mm |
| $\phi_{ext}$ = 0,82 $\phi_N$ | $e_c$ = 9,0 mm | $e_c/e_v$ = 1,22 |
| E = 0,46 | $e_v$ = 7,4 mm | $D_A/L$ = 0,64 |
| $\phi_{ML}$ = 0,14 $\phi_N$ | $D_A$ = 52,9 mm | $\phi_s/\phi_N$ = 0,62 |
| $d_{min}$ = 0,49 $\phi_{ML}$ | $\phi_s$ = 237,30 mm | |
| rc = 4 mm | $D_{s'}$ = 34,6 mm | |

Le poids de la roue est de 5,6 Kg.

Des fissures apparaissent prématurément dans le voile avant 200 000 cycles où l'essai de fatigue a été interrompu pour examen.

**Revendications**

1. Roue moulée en alliage d'aluminium pour automobile, du type comportant un voile et une jante, le voile comportant une zone généralement lisse, dans laquelle sont formées des lumières de gain de poids et de ventilation de frein, et des zones adjacentes, généralement pleines et lisses, caractérisée en ce que les lumières ont une forme généralement circulaire ou ovale et en ce que l'excentricité des lumières a une valeur comprise entre 0,7 et 1, de préférence entre 0,9 et 1.

2. Roue selon la revendication 1, caractérisée en ce que le diamètre extérieur de la zone des lumières est compris entre 70% et 90% du diamètre normalisé de la roue.

3. Roue selon la revendication 1, caractérisée en ce que lesdites lumières de gain de poids sont formées dans une région en forme générale de couronne.

4. Roue selon la revendication 1, caractérisée en ce que le diamètre moyen des lumières a une valeur comprise entre 7% et 15% du diamètre normalisé de la roue.

5. Roue selon l'une des revendications 1 et 4, caractérisée en ce que la distance minimale entre deux lumières adjacentes est comprise entre environ 40% et environ 100% du diamètre moyen desdites lumières adjacentes.

6. Roue selon l'une des revendications 1 à 5, caractérisée en ce que lesdites lumières se raccordent avec une face extérieure du voile par des surfaces courbes dont le rayon de courbure est compris-entre 1 et 6 mm.

7. Roue selon l'une des revendications 1 à 6, caractérisée en ce que le voile présente un profil généralement convexe du côté extérieur de la roue.

8. Roue selon la revendication 7, caractérisée en ce que le voile présente une région de sommet extérieur circulaire dont le diamètre est compris entre environ 50% et environ 75% du diamètre de la roue.

9. Roue selon la revendication 8, caractérisé en ce que la distance horizontale entre ladite région de sommet et un plan d'appui de la roue est compris entre environ 30 mm et environ 55 mm.

10. Roue selon l'une des revendications 1 à 9, caractérisé en ce qu'elle comprend à la transition entre le voile et la jante une partie saillante définissant une gorge permettant l'accrochage de l'enjoliveur, ainsi qu'une retenue de pneumatique.

11. Roue selon la revendication 10, caractérisée en ce que l'épaisseur de ladite partie saillante au voisinage de la jante et du voile est sensiblement supérieure à l'épaisseur du voile au voisinage de la jante et de ladite partie saillante.

12. Roue selon la revendication 11, caractérisée en ce que le rapport entre ladite épaisseur de la partie saillante et ladite épaisseur du voile est inférieur ou égal à environ 1,35.

13. Roue selon l'une des revendications 10 à 12, caractérisée en ce que le rapport entre la distance du point de raccordement de la jante, du voile et de la partie saillante au plan médian de la roue et la demi-largeur de la jante est compris entre environ 0,57 et environ 0,79.

14. Roue selon l'une des revendications 1 à 13, caractérisée en ce que l'épaisseur de la jante est comprise entre environ 2,5 et 4 mm.

15. Roue selon l'une des revendications 1 à 14, caractérisée en ce que la roue est traitée thermiquement par mise en solution, trempe et revenu.

**Claims**

1. A cast aluminum alloy car wheel, the wheel being of the type comprising a web and a rim, the web comprising a generally smooth zone in which weight-saving and brake-ventilating openings are formed, together with generally solid and smooth adjacent zones, the wheel being characterized in that the openings are generally circular or oval in shape and in that the eccentricity of the openings has a value lying in the range 0.7 to 1 and preferably in the range 0.9 to 1.

2. A wheel according to claim 1, characterized in that the outside diameter of the zone having the openings lies in the range 70% to 90% of the standardized diameter of the wheel.

3. A wheel according to claim 1, characterized in that said weight saving openings are formed in a region that is generally annular in shape.

4. A wheel according to claim 1, characterized in that the mean diameter of the openings has a value lying in the range 7% to 15% of the standardized diameter of the wheel.

5. A wheel according to claim 1 or claim 4, characterized in that the minimum distance between the two adjacent openings lies in the range about 40% to about 100% of the mean diameter of said adjacent openings.

6. A wheel according to any one of claims 1 to 5, characterized in that said openings join an outside face of the web via curved surfaces having a radius of curvature lying in the range 1 mm to 6 mm.

7. A wheel according to any one of claims 1 to 6, characterized in that the web has a profile that is generally convex on the outside of the wheel.

8. A wheel according to claim 7, characterized in that the web has a circular outer summit region with a diameter lying in the range about 50% to about 75% of the diameter of the wheel.

9. A wheel according to claim 8, characterized in that the horizontal distance between said summit region and the bearing plane of the wheel lies in the range about 30 mm to about 55 mm.

10. A wheel according to any one of claims 1 to 9, characterized in that, at the transition between the web and the rim, it has a projecting portion defining a groove enabling a hubcap to be secured thereto, and also serving to retain a tire.

11. A wheel according to claim 10, characterized in that the thickness of said projecting portion in the vicinity of the rim and the web is perceptibly greater than the thickness of the web in the vicinity of the rim and said projecting portion.

12. A wheel according to claim 11, characterized in that the ratio between said thickness of the projecting portion and the thickness of the web is less than or equal to about 1.35.

13. A wheel according to any one of claims 10 to 12, characterized in that the ratio between the distance between the point where the rim, the web, and the projecting portion meet at the midplane of the wheel and the half-width of the rim lies in the range about 0.57 to about 0.79.

14. A wheel according to any one of claims 1 to 13, characterized in that the thickness of the rim lies in the range about 2.5 mm to about 4 mm.

15. A wheel according to any one of claims 1 to 14, characterized in that the wheel is heat-treated by being put into a solution, quenched, and annealed.

**Patentansprüche**

1. Aus einer Aluminiumlegierung gegossenes Rad für ein Kraftfahrzeug mit einem Radkörper und einem Radkranz, wobei der Radkörper wenigstens einen im wesentlichen ebenen Bereich, in dem Löcher zur Gewichtsersparnis und zur Bremsbelüftung ausgebildet sind, und benachbarte Bereiche aufweist, die im wesentlichen vollwandig und eben sind, dadurch gekennzeichnet, daß die Löcher eine im wesentlichen kreisförmige oder ovale Form haben und daß die Exzentrizität der Löcher einen Wert zwischen 0,7 und 1, vorzugsweise zwischen 0,9 und 1 hat.

2. Rad nach Anspruch 1, dadurch gekennzeichnet, daß der Außendurchmesser des Bereiches der Löcher zwischen 70 % und 90 % des normalisierten Durchmessers des Rades liegt.

3. Rad nach Anspruch 1, dadurch gekennzeichnet, daß die besagten Löcher zur Gewichtsersparnis in einem Bereich ausgebildet sind, der die Form im wesentlichen eines Kranzes hat.

4. Rad nach Anspruch 1, dadurch gekennzeichnet, daß der mittlere Durchmesser der Löcher einen Wert zwischen 7 % und 15 % des Normdurchmessers des Rades hat.

5. Rad nach einem der Ansprüche 1 und 4, dadurch gekennzeichnet, daß der kleinste Abstand zwischen zwei benachbarten Löchern zwischen etwa 40 % und etwa 100 % des mittleren Durchmessers der besagten benachbarten Löcher liegt.

6. Rad nach einem der Ansprüche 1 bis 5, dadurch gekennzeichnet, daß die besagten Löcher sich an eine Außenfläche des Radkörpers über gekrümmte Flächen anschließen, deren Krümmungsradius zwischen 1 und 6 mm liegt.

7. Rad nach einem der Ansprüche 1 bis 6, dadurch gekennzeichnet, daß der Radkörper ein im wesentlichen zum Außenrand des Rades konvexes Profil hat.

8. Rad nach Anspruch 7, dadurch gekennzeichnet, daß der Radkörper einen äußeren kreisförmigen Scheitelbereich hat, dessen Durchmesser zwischen etwa 50 % und etwa 75 % des Durchmessers des Rades liegt.

9. Rad nach Anspruch 8, dadurch gekennzeichnet, daß der horizontale Abstand zwischen dem besagten Scheitelbereich und einer Auflagefläche des Rades zwischen etwa 30 mm und etwa 55 mm liegt.

10. Rad nach einem der Ansprüche 1 bis 9, dadurch gekennzeichnet, daß es am Übergang zwischen dem Radkörper und dem Radkranz einen vorstehenden Teil aufweist, der eine Hohlkehle, die das Einhängen einer Zierleiste erlaubt, sowie einen pneumatischen Stau bildet.

11. Rad nach Anspruch 10, dadurch gekennzeichnet, daß die Dicke des besagten vorstehenden Teils in der Nähe des Radkörpers und des Radkranzes wesentlich größer als die Dicke des Radkörpers in der Nähe des Radkranzes und des besagten vorstehenden Teils ist.

12. Rad nach Anspruch 11, dadurch gekennzeichnet, daß das Verhältnis zwischen der besagten Dicke des vorstehenden Teils und der besagten Dicke des Radkranzes kleiner oder gleich etwa 1,35 ist.

13. Rad nach einem der Ansprüche 10 bis 12, dadurch gekennzeichnet, daß das Verhältnis zwischen dem Abstand des Anschlußpunktes des Radkörpers, des Radkranzes und des vorstehenden Teils in der Mittelebene des Rades und der halben Größe des Radkranzes zwischen etwa 0,57 und etwa 0,79 liegt.

14. Rad nach einem der Ansprüche 1 bis 13, dadurch gekennzeichnet, daß die Dicke des Radkranzes zwischen etwa 2,5 und 4 mm liegt.

15. Rad nach einem der Ansprüche 1 bis 14, dadurch gekennzeichnet, daß das Rad durch Eingeben in eine Lösung, Abschrekken und Anlassen wärmebehandelt ist.

FIG. 1

FIG. 2

FIG. 4

FIG. 3

# FIG.5

FIG. 6

FIG.7

$\emptyset_N$

$\emptyset_{ext}$

$\emptyset_{ML}$

dmin

FIG.8

# FIG.9

FIG.10